# EUROPÄISCHE PATENTSCHRIFT

(11) **EP 2 594 055 B1**
(45) Veröffentlichungstag und Bekanntmachung des Hinweises auf die Patenterteilung: **20.12.2017**
(21) Anmeldenummer: 11728837.3
(22) Anmeldetag: 30.06.2011
(51) Int. Cl.: H04M 1/2755

(54) **VERFAHREN BEI DEM EIN MOBILTELEFON EINEN, SICH AN EINEM DEFEKTEN HAUSHALTSGERÄT BEFINDLICHEN, BARCODE LIEST UND AUTOMATISCH MIT DEM KUNDENDIENST VERBUNDEN WIRD**
METHOD IN WHICH A MOBILE PHONE READS A BAR CODE LOCATED ON A DEFECTIVE DOMESTIC APPLIANCE AND IS AUTOMATICALLY CONNECTED TO CUSTOMER SERVICE
PROCÉDÉ SELON LEQUEL UN TÉLÉPHONE MOBILE LIT UN CODE À BARRES SE TROUVANT SUR UN APPAREIL MÉNAGER DÉFECTUEUX ET EST RELIÉ AUTOMATIQUEMENT AU SERVICE APRÈS-VENTE

(30) Priorität: 13.07.2010 DE 102010031283
(43) Veröffentlichungstag der Anmeldung: 22.05.2013
(73) Patentinhaber: BSH Hausgeräte GmbH, 81739 München (DE)
(72) Erfinder: SCHRAUFSTETTER, Thomas, 85435 Erding (DE); KERSCHER, Melanie, 84416 Taufkirchen/Vils (DE)
(86) Internationale Anmeldenummer: PCT/EP2011/060992
(87) Internationale Veröffentlichungsnummer: WO 2012/007286

(56) Entgegenhaltungen:
- DE-A1-102005 049 811
- GB-A- 2 246 491
- GB-A- 2 359 956
- JP-A- 2004 208 256
- JP-A- 2008 090 704
- US-A1- 2005 139 674
- US-A1- 2006 056 707
- US-A1- 2006 123 041

## Beschreibung

Die Erfindung betrifft ein Verfahren zum Unterstützen einer Bedienperson eines Haushaltsgerätes beim Aufnehmen eines Kontaktes mit einem Kundendienst für das Haushaltsgerät mithilfe eines tragbaren Kommunikationsgerätes. Die Erfindung bezieht sich außerdem auf ein tragbares Kommunikationsgerät, wie auch auf ein System mit einem tragbaren Kommunikationsgerät und einem Haushaltsgerät. Sofern im Folgenden von einem Hausgerät die Rede ist, so ist dies lediglich als Synonym für Haushaltsgerät zu verstehen.

Vorliegend richtet sich das Interesse insbesondere auf den automatischen Aufbau einer Kommunikationsverbindung zwischen einem tragbaren Kommunikationsgerät - wie beispielsweise einem Mobiltelefon, einem tragbaren Personalcomputer (z. B. Personal Digital Assistant) oder dergleichen - des Benutzers eines Hausgerätes mit einer externen bzw. vom Hausgerät entfernten Kommunikationseinrichtung eines Kundendienstes. Es ist bekannt, dass die Bedienperson eines Hausgerätes Kontakt mit dem Kundendienst aufnehmen kann, nämlich beispielsweise im Falle eines Fehlers des Hausgerätes. Z. B. kann die Bedienperson den Kundendienst anrufen oder aber eine Nachricht an den Kundendienst übersenden, etwa über das Internet. Die Bedienperson hat jedoch die Kontaktdaten des Kundendienstes nicht immer parat; diese Kontaktdaten müssen häufig in aufwändiger Weise gesucht werden. Auch die Beschreibung des aufgetretenen Problems des Hausgerätes durch die Bedienperson ist häufig problematisch. Der Kundendienst bekommt nicht immer ein genaues Bild des entdeckten Problems und wird somit nicht immer genau darüber informiert, was tatsächlich defekt ist.

Die DE 102005049811 A1 beschreibt ein Mobiltelefon mit Barcodeerkennung. Aufgrund des Barcodes wird eine vorbestimmte Aktion ausgeführt. Die GB 2246491A beschäftigt sich ebenfalls mit einem Telefon mit einem Barcode-Leser. In der GB 2359956 A wird ein Telefon mit einem Barcode-Leser beschrieben, der eine Telefonnummer einlesen kann. Die US 2006/0123041 A1 beschäftigt sich mit einem Mobiltelefon mit einem Lesegerät mit einer geringen Reichweite, wie z.B. einem RFID-Lesegerät. Die US 2006/0056707 A1 offenbart ein digitales Gerät, das fähig ist, einen QR-Code zu lesen.

Die JP 2008090704 zeigt einen Haus-Stromnetz-Sicherungskasten. In einer ersten Ausführungsform wird ein 2-dimensionaler Barcode beschrieben, der am Sicherungskasten angeklebt ist. Er codiert die Vertragsnummer, eine URL und eine Typen-Nummer. Der Barcode wird mithilfe eines Mobiltelefons gelesen. In einer zweiten Ausführungsform besitzt der Sicherungskasten einen RFID-Tag. Wenn eine nicht normale Spannung detektiert wird, wird eine entsprechende Information auf den RFID-Tag geschrieben. Das Mobiltelefon besitzt ein RFID-Tag-Lesegerät, liest mit diesem den RFID-Tag aus und nimmt anschließend Kontakt mit dem Server auf.

Die JP 2004208256 beschreibt einen elektrischen Wassererhitzer, der von einem Mobiltelefon eine Anfrage erhalten kann und fähig ist, verschiedene Informationen, wie seinen Modellnamen und seine Seriennummer, zurückzusenden. In der US 2005/0139674 A1 ist wiederum ein Mobiltelefon mit einem Barcode-Lesegerät beschrieben.

Es ist Aufgabe der Erfindung, einen Weg aufzuzeigen, wie die Kontaktaufnahme einer Bedienperson eines Haushaltsgerätes mit einem Kundendienst ohne viel Aufwand erfolgen kann.

Diese Aufgabe wird erfindungsgemäß durch ein Verfahren mit den Merkmalen gemäß Patentanspruch 1 sowie durch ein System mit den Merkmalen gemäß Patentanspruch 9 gelöst. Vorteilhafte Ausführungen der Erfindung sind Gegenstand der abhängigen Patentansprüche und der Beschreibung.

Bei einem erfindungsgemäßen Verfahren wird eine Bedienperson eines Haushaltsgerätes beim Aufnehmen eines Kontaktes mit einem Kundendienst für das Haushaltsgerät mithilfe eines tragbaren Kommunikationsgerätes unterstützt. Es wird ein an dem Haushaltsgerät angebrachter Code durch eine optische Erfassungseinrichtung des tragbaren Kommunikationsgeräts erfasst. Aufgrund des erfassten Codes wird durch das tragbare Kommunikationsgerät eine Kommunikationsverbindung zu einer Kommunikationseinrichtung des Kundendienstes aufgebaut.

Demnach wird ein erfindungsgemäßer Effekt dadurch erzielt, dass ein am Haushaltsgerät angebrachter und optoelektronisch lesbarer - maschinenlesbarer - Code durch das tragbare Kommunikationsgerät eingescannt wird und aufgrund dieses Codes die Kommunikationsverbindung zum Kundendienst automatisch durch das tragbare Kommunikationsgerät hergestellt wird. Die Erfindung hat diverse Vorteile: Die Bedienperson muss die Kontaktdaten des Kundendienstes nicht in aufwändiger Weise suchen, um dann den Kundendienst zu kontaktieren. Die Bedienperson muss lediglich den am Hausgerät angebrachten Code einscannen, nämlich mithilfe des tragbaren Kommunikationsgerätes, und sie kann dann mit dem Kundendienst verbunden werden. Die Bedienperson kann nun dem Kundendienst den gegebenenfalls aufgetretenen Fehler des Hausgerätes näher beschreiben und nach einer Anweisung des geschulten Personals selbst beheben oder aber einen Termin für einen Technikereinsatz vereinbaren. Also kann die Bedienperson den Kundendienst ohne viel Aufwand kontaktieren, ohne die notwendigen Kontaktdaten des Kundendienstes kennen zu müssen.

Unter einem Hausgerät wird vorliegend ein Haushaltsgerät verstanden, also ein Gerät, das zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube, ein Kältegerät, eine Kühl-Gefrier-Kombination oder ein Klimagerät. Das kann aber auch ein Haushaltskleingerät sein, wie beispielsweise ein Staubsauger, ein Kaffeevollautomat oder eine Küchenmaschine.

Unter dem tragbaren Kommunikationsgerät wird insbesondere ein mobiles Endgerät verstanden, mittels welchem die Bedienperson telefonieren und/oder Daten über das Internet übertragen kann. Das tragbare Kommunikationsgerät kann beispielsweise ein Mobiltelefon oder ein tragbarer beziehungsweise mobiler Personalcomputer sein.

Bevorzugt wird die Kommunikationsverbindung über das Internet aufgebaut, so dass Daten zwischen dem tragbaren Kommunikationsgerät und der Kommunikationseinrichtung des Kundendienstes über das Internet übertragen werden. Die Kommunikationsverbindung kann eine bidirektionale Verbindung sein, über welche Daten sowohl von dem tragbaren Kommunikationsgerät an die Kommunikationseinrichtung des Kundendienstes als auch in umgekehrter Richtung übertragen werden können. Eine Kommunikationsverbindung über das Internet ermöglicht die Übertragung von Daten mit einer hohen Datenrate. Auf diesem Wege gelingt es, beispielsweise auch Videodaten zwischen dem tragbaren Kommunikationsgerät und der Kommunikationseinrichtung des Kundendienstes zu übertragen.

Die Kommunikationsverbindung kann aufgrund des erfassten Codes unmittelbar oder aber nach Erfülltsein eines - insbesondere auf eine Eingabe der Bedienperson bezogenen - vorbestimmten Kriteriums aufgebaut werden. Dies bedeutet, dass das Aufbauen der Kommunikationsverbindung automatisch unmittelbar bzw. direkt nach dem Erfassen des Codes oder aber erst dann erfolgen kann, wenn das vorbestimmte Kriterium erfüllt ist. Dieses vorbestimmte Kriterium kann die Bedingung beinhalten, dass der Aufbau der Kommunikationsverbindung durch die Bedienperson genehmigt wird. Also kann das tragbare Kommunikationsgerät eine Eingabe -welche die Bedienperson mithilfe einer Eingabeeinrichtung des Kommunikationsgeräts vornimmt - empfangen, über welche das Aufbauen der Kommunikationsverbindung durch die Bedienperson genehmigt wird. Eine solche Vorgehensweise ist besonders benutzerfreundlich: Nach dem Einscannen des Codes wird die Bedienperson durch das tragbare Kommunikationsgerät gefragt, ob die Kommunikationsverbindung zum Kundendienst tatsächlich hergestellt werden soll oder nicht. Die Bedienperson kann dann den Aufbau der Kommunikationsverbindung bestätigen und genehmigen oder auch nicht. Es werden somit Situationen vermieden, in denen die Kommunikationsverbindung ohne den Willen der Bedienperson hergestellt wird.

Die Erfassung des Codes erfolgt mithilfe der optischen Erfassungseinrichtung des tragbaren Kommunikationsgerätes. Bei dem Code handelt es sich also um einen optoelektronisch lesbaren Code bzw. ein optoelektronisch lesbares - maschinenlesbares - Zeichen. Die optische Erfassungseinrichtung kann beispielsweise eine Digitalkamera des tragbaren Kommunikationsgerätes sein. Das Einscannen von Barcodes mithilfe einer Digitalkamera eines tragbaren Kommunikationsgerätes ist bereits aus dem Stand der Technik bekannt, nämlich aus der deutschen Offenlegungsschrift
DE 10 2005 049 811 A1. Die Erfassung des Codes kann also auf die Art und Weise wie im Gegenstand gemäß Druckschrift DE 10 2005 049 811 A1 erfolgen. Alternativ kann jedoch vorgesehen sein, dass das Einscannen des Codes mithilfe einer solchen optischen Erfassungseinrichtung erfolgt, die eine Vielzahl von Leuchtmitteln - insbesondere von LEDs - sowie eine Vielzahl von Lichtdetektoren beinhaltet. Der Code kann dann mithilfe der Leuchtmittel beleuchtet werden, und das reflektierte Licht kann durch die Lichtdetektoren detektiert werden.

Prinzipiell können über die Kommunikationsverbindung lediglich Audiodaten bzw. Sprachsignale zwischen dem tragbaren Kommunikationsgerät und der Kommunikationseinrichtung des Kundendienstes übertragen werden, so dass die Bedienperson mit dem Kundendienst durch Sprachsignale kommunizieren kann. Es erweist sich jedoch als besonders vorteilhaft, wenn über die Kommunikationsverbindung sowohl Audiodaten bzw. Sprachsignale als auch Videodaten bzw. Bildsignale zwischen dem tragbaren Kommunikationsgerät und der Kommunikationseinrichtung des Kundendienstes übertragen werden. Es können beispielsweise durch eine Digitalkamera des tragbaren Kommunikationsgerätes aufgenommene Videodaten und/oder durch eine an die Kommunikationseinrichtung des Kundendienstes angeschlossene Digitalkamera aufgenommene Videodaten zwischen dem tragbaren Kommunikationsgerät und der Kommunikationseinrichtung des Kundendienstes übertragen werden. Auf diese Weise wird auch eine optische Verbindung zwischen der Bedienperson bzw. der Umgebung des tragbaren Kommunikationsgerätes und dem Kundendienstpersonal geschaffen, so dass zusätzlich zu Sprachsignalen eine Vielzahl von weiteren optischen Informationen übertragen werden kann. Auf diesem Wege kann dem Kundendienstpersonal auch ein tatsächliches optisches Bild des möglicherweise defekten Hausgerätes übermittelt werden, und das Kundendienstpersonal kann sich über die gegebenenfalls vorhandenen Probleme näher informieren. Somit kann ein Fehler des Hausgerätes gegebenenfalls schneller behoben werden, eventuell auch ohne einen Technikereinsatz. Die Übertragung von Bilddaten zwischen dem tragbaren Kommunikationsgerät und der Kommunikationseinrichtung des Kundendienstes erweist sich insbesondere bei solchen Fehlern des Hausgerätes als besonders vorteilhaft, welche auf optischem Wege erkannt werden können. Es könnte sich hier beispielsweise um defekte Druckknöpfe einer Bedieneinrichtung des Hausgerätes handeln.

Um zwischen dem tragbaren Kommunikationsgerät und der Kommunikationseinrichtung des Kundendienstes Audiodaten und/oder Videodaten übertragen zu können, wird auf dem tragbaren Kommunikationsgerät in bevorzugter Weise eine entsprechende Software installiert. Solche Computerprogramme, die eine Datenübertragung von Audiodaten und Videodaten über das Internet ermöglichen, sind bereits aus dem Stand der Technik bekannt. Es kann beispielsweise eine Software eingesetzt werden, wie sie unter www.bambuser.com abgerufen werden kann.

Wie bereits ausgeführt, handelt es sich bei dem Code insbesondere um einen optoelektronisch lesbaren Code, welcher mithilfe einer optischen Erfassungseinrichtung eingescannt werden kann. Der Code kann beispielsweise ein eindimensionaler Code - wie beispielsweise ein Barcode - oder aber ein zweidimensionaler Code sein, wie z. B. ein Matrix-Code. Ein solcher maschinenlesbarer Code kann beispielsweise an einer Stirnseite oder aber einer Seitenwand des Hausgerätes angebracht sein, so dass er für die Erfassung mittels des tragbaren Kommunikationsgerätes zugänglich ist. Wird ein zweidimensionaler Code verwendet, so kann dieser deutlich mehr Informationen als ein eindimensionaler Code beinhalten. Zweidimensionale Codes sind den eindimensionalen bzw. linearen Codes nämlich technisch überlegen, da sie wesentlich mehr Informationen umfassen können und viel weniger anfällig für Datenbeschädigungen sind. Durch Verwendung eines zweidimensionalen Codes können also mehrere Informationen mit einem einzigen Code codiert werden.

Der am Haushaltsgerät angebrachte Code kann verschiedenste Informationen beinhalten. Der Code kann zunächst eine solche Information beinhalten, aufgrund deren die Kommunikationsverbindung hergestellt wird. Diese Information veranlasst also - wie ein Steuerbefehl - das tragbare Kommunikationsgerät dazu, die Kommunikationsverbindung zur Kommunikationseinrichtung des Kundendienstes aufzubauen. Der Code kann aber auch weitere Informationen beinhalten, nämlich beispielsweise eine Kennzeichnung des Hausgerätes und/oder eine Kommunikationsnummer, die es erlaubt, die Kommunikationsverbindung mit der Kommunikationseinrichtung des Kundendienstes aufzubauen. Bei der Kennzeichnung des Hausgerätes kann es sich beispielsweise um eine spezifische Seriennummer handeln, die dieses einzelne Hausgerät eindeutig kennzeichnet. Es ist hier insbesondere eine solche Nummer gemeint, die gerätespezifisch ist und somit dieses einzelne Gerätestück von anderen Hausgeräten unterscheiden lässt. Bei der Kommunikationsnummer kann es sich z. B. um die Telefonnummer des Kundendienstes oder aber um die IP-Adresse der Kommunikationseinrichtung des Kundendienstes handeln. Auf diesem Wege gelingt es, einen informationsreichen Code bereitzustellen, welcher eine Vielzahl von nützlichen Informationen beinhaltet.

Über die aufgebaute Kommunikationsverbindung können auch solche Daten von dem tragbaren Kommunikationsgerät an die Kommunikationseinrichtung des Kundendienstes übertragen werden, die zumindest eine in dem Code enthaltene Information beinhalten. Erfindungsgemäß werden über die Kommunikationsverbindung Daten an die Kommunikationseinrichtung des Kundendienstes übertragen, die die Kennzeichnung des Hausgerätes umfassen. Somit können die notwendigen Gerätedaten - wie z. B. seine Seriennummer - durch das tragbare Kommunikationsgerät anhand des Codes erfasst und an die Kommunikationseinrichtung des Kundendienstes übertragen werden. Das Kundendienstpersonal kann dann dem Hausgerät zugeordnete Informationsdaten aus einer Datenbank abrufen und sich somit genauer über den Typ des Hausgerätes, wie auch über seine Komponenten genauer informieren, ohne den Kunden mit schwierigen Fragen bezüglich des Hausgerätes zu belästigen. Das Kundendienstpersonal kann aus der Datenbank auch kundenspezifische Informationen abrufen. Somit kann sich das Kundendienstpersonal mit den spezifischen Bedürfnissen des Kunden auseinandersetzen. Der Einsatz einer CRM-Datenbank (Customer Relationship Management) ermöglicht dabei einen schnellen Zugriff auf die kompletten Daten des Kunden. Eine gut geführte CRM-Datenbank ermöglicht es nämlich, den Kunden schnell und individuell anzusprechen und zu beraten. Die Kommunikation des Kundendienstes mit der Bedienperson des Hausgerätes kann dementsprechend schnell und aufmerksam vonstatten gehen.

Umfasst das tragbare Kommunikationsgerät einen GPS-Empfänger (Global Positioning System), so können über die Kommunikationsverbindung auch Positionsdaten an die Kommunikationseinrichtung des Kundendienstes übertragen werden, die Informationen über eine aktuelle globale Position des tragbaren Kommunikationsgerätes beinhalten. Somit kann das tragbare Kommunikationsgerät und hierdurch das Hausgerät geortet werden. Diese Übertragung von Kommunikationsdaten an die Kommunikationseinrichtung des Kundendienstes kann - ebenfalls wie der Aufbau der Kommunikationsverbindung - unter der Voraussetzung erfolgen, dass die Bedienperson dies genehmigt. Dann kann das tragbare Kommunikationsgerät eine Eingabe der Bedienperson empfangen, über welche die Übertragung der Positionsdaten durch die Bedienperson freigegeben wird. Erfindungsgemäß werden weiterhin Fehlerdaten von einer Kommunikationseinheit des Hausgerätes an das tragbare Kommunikationsgerät - drahtlos oder drahtgebunden - übertragen, die vom Hausgerät - z. B. durch entsprechende Sensoren - vorzugsweise aufgezeichnet und vorzugsweise in einem Speicher des Hausgerätes abgespeichert wurden. Zu diesem Zwecke kann das Hausgerät eine Kommunikationsschnittstelle aufweisen, die Daten beispielsweise gemäß dem Bluetooth®-Standard und/oder dem WLAN-Standard (Wireless Local Area Network) senden und/oder empfangen kann. Die Fehlerdaten können Informationen über gegebenenfalls aufgetretene Fehler des Hausgerätes beinhalten. Das tragbare Kommunikationsgerät überträgt die Fehlerdaten dann an die Kommunikationseinrichtung des Kundendienstes. Dem Kundendienstpersonal stehen somit durch das Hausgerät selbst aufgezeichnete Fehlerdaten zur Verfügung, die durch das Kundendienstpersonal ausgewertet werden können. Das Kundendienstpersonal kann somit den Fehler des Hausgerätes leichter und einfacher diagnostizieren. Z. B. kann das Kundendienstpersonal zunächst auf der Grundlage eines (Video-)Gespräches mit dem Kunden eine Erstdiagnose erstellen, die dann anhand der Fehlerdaten des Hausgerätes plausibilisiert werden kann.

Ein tragbares Kommunikationsgerät umfasst eine optische Erfassungseinrichtung zum Erfassen eines Codes, wie auch eine Steuereinrichtung, die dazu ausgelegt ist, aufgrund des erfassten Codes eine Kommunikationsverbindung zwischen dem tragbaren Kommunikationsgerät und einer Kommunikationseinrichtung eines Kundendienstes aufzubauen.

Ein erfindungsgemäßes System umfasst ein tragbares Kommunikationsgerät, wie auch ein Hausgerät. Am Hausgerät ist ein optoelektronisch lesbarer Code angebracht, durch welchen das tragbare Kommunikationsgerät dazu veranlasst wird, eine Kommunikationsverbindung zu einer Kommunikationseinrichtung eines Kundendienstes aufzubauen.

Die mit Bezug auf das erfindungsgemäße Verfahren vorgestellten bevorzugten Ausführungsformen und deren Vorteile gelten entsprechend für das Kommunikationsgerät sowie das erfindungsgemäße System.

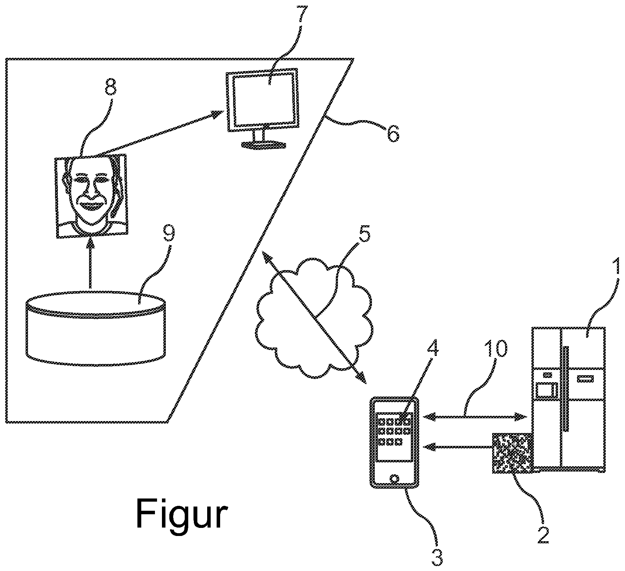

Weitere Vorteile der Erfindung ergeben sich aus den Ansprüchen, der Figur und der Figurenbeschreibung. Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand eines bevorzugten Ausführungsbeispiels näher erläutert, wie auch unter Bezugnahme auf die beigefügte Zeichnung. Die einzige Figur veranschaulicht in schematischer Darstellung eine Anordnung, anhand derer ein Verfahren gemäß einer Ausführungsform der Erfindung näher erläutert wird.

In einem Haushalt befindet sich ein Hausgerät 1, welches im Ausführungsbeispiel eine Kühl-Gefrier-Kombination ist. Am Hausgerät 1 ist ein maschinenlesbarer bzw. optoelektronisch lesbarer Code 2 angebracht. Der Code 2 kann beispielsweise ein zweidimensionaler Code sein, nämlich z. B. ein Matrix-Code.

Ein tragbares Kommunikationsgerät 3 ist im Ausführungsbeispiel ein Mobiltelefon. Das Mobiltelefon 3 umfasst ein berührungsempfindliches Display 4, welches einerseits die Funktion einer Anzeigeeinrichtung und andererseits die Funktion einer Bedieneinrichtung hat. Das Mobiltelefon 3 umfasst außerdem eine in der Figur nicht näher dargestellte Digitalkamera. Die Digitalkamera ist eine optische Erfassungseinrichtung, die Licht in dem vom Menschen wahrnehmbaren Spektralbereich detektieren kann. Die Digitalkamera erfasst Bilddaten und übermittelt sie an eine Steuereinrichtung (in der Figur nicht dargestellt) des Mobiltelefons 3. Die Steuereinrichtung des Mobiltelefons 3 kann die aufgenommenen Bilddaten verarbeiten.

Das Mobiltelefon 3 ist dazu eingerichtet, den Code 2 mithilfe der Digitalkamera zu erfassen. Die Steuereinrichtung des Mobiltelefons 3 kann die kodierten Daten des Codes 2 dekodieren und somit die im Code 2 enthaltenen Informationen gewinnen und verarbeiten. Zu diesem Zwecke kann auf dem Mobiltelefon 3 ein Computerprogramm bzw. eine Software installiert sein, die es ermöglicht, mithilfe eines Bildverarbeitungsalgorithmus die im Code 2 enthaltenen Informationen zu gewinnen. Aufgrund des eingescannten Codes 2 kann die Steuereinrichtung des Mobiltelefons 3 eine Kommunikationsverbindung 5 zu einem Kundendienst 6 aufbauen. Genauer gesagt, kann das Mobiltelefon 3 die Kommunikationsverbindung 5 zu einer Kommunikationseinrichtung 7 des Kundendienstes 6 herstellen. Diese Kommunikationsverbindung 5 wird im Ausführungsbeispiel über das Internet aufgebaut, so dass eine Datenübertragung zwischen dem Mobiltelefon 3 und der Kommunikationseinrichtung 7 mit einer hohen Datenrate erfolgen kann.

Der Code 2 kann verschiedenste Informationen beinhalten: Der Code 2 umfasst zunächst einen Steuerbefehl, der das Mobiltelefon 3 bzw. seine Steuereinrichtung dazu veranlasst, die Kommunikationsverbindung 5 aufzubauen. Der Code 2 kann auch eine Kennzeichnung des Hausgerätes als Information beinhalten. Diese Kennzeichnung kann beispielsweise in Form einer Seriennummer vorliegen, durch welche das Hausgerät 1 eindeutig bezeichnet ist und welche das Hausgerät 1 von anderen Hausgeräten - auch des gleichen Typs - unterscheiden lässt. Die Kennzeichnung ist also eine für diese einzelne Hausgerät 1 spezifische Nummer. In dem Code 2 kann außerdem eine Kommunikationsnummer kodiert sein, die es erlaubt, die Kommunikationsverbindung 5 mit der Kommunikationseinrichtung 7 aufzubauen. Diese Kommunikationsnummer kann z. B. die IP-Adresse der Kommunikationseinrichtung 7 sein.

Die Kommunikationseinrichtung 7 kann beispielsweise als Personalcomputer ausgebildet sein. Auch an die Kommunikationseinrichtung 7 kann eine Digitalkamera angeschlossen sein, die beispielsweise Bilder von einem Kundendienstpersonal 8 aufnehmen kann. Die Kommunikationseinrichtung 7 ist mit einer Datenbank 9 gekoppelt und kann in der Datenbank 9 abgelegte Daten abrufen. Die Datenbank 9 kann eine CRM-Datenbank sein, die eine Vielzahl von kundenspezifischen Daten beinhaltet und somit ermöglicht, einen Kunden schnell und individuell anzusprechen und zu beraten, so dass die Kommunikation mit dem Kunden schnell und aufmerksam vonstatten gehen kann.

Ein Verfahren gemäß einer Ausführungsform der Erfindung wird nachfolgend näher beschrieben. Eine Bedienperson des Hausgeräts 1 stellt einen Fehler des Hausgeräts 1 fest. Die Bedienperson stellt beispielsweise fest, dass Druckknöpfe oder aber eine Anzeigeeinrichtung des Hausgerätes 1 defekt sind. Die Bedienperson nimmt das Mobiltelefon 3, aktiviert die Digitalkamera und nimmt ein Bild von dem Code 2 auf. Die Steuereinrichtung des Mobiltelefons 3 empfängt nun Bilddaten mit dem abgebildeten Code 2. Die Steuereinrichtung des Mobiltelefons 3 verarbeitet die Bilddaten und gewinnt die oben bezeichneten und im Code 2 enthaltenen Informationen. Die Steuereinrichtung des Mobiltelefons 3 steuert nun das berührungsempfindliche Display 4 des Mobiltelefons 3 derart an, dass der Bedienperson eine Frage angezeigt wird, ob die Kommunikationsverbindung 5 hergestellt werden soll oder nicht. Die Bedienperson kann nun den Aufbau der Kommunikationsverbindung 5 freigeben oder nicht, nämlich mithilfe des berührungsempfindlichen Displays 4.

Genehmigt die Bedienperson den Aufbau der Kommunikationsverbindung 5, so wird diese automatisch durch die Steuereinrichtung des Mobiltelefons 3 hergestellt. Zu diesem Zwecke kann auf dem Mobiltelefon 3 eine Software installiert sein, wie sie beispielsweise aus der Internetseite www.bambuser.com bekannt ist.

Also wird die Bedienperson quasi automatisch zum Kundendienst 6 verbunden. Es erfolgt dabei eine automatische Aktivierung einer Freisprecheinrichtung des Mobiltelefons 3, so dass die Bedienperson mit dem Kundendienstpersonal 8 Kontakt aufnehmen kann. Und zwar kann die Bedienperson mit dem Kundendienstpersonal 8 Gespräche führen. Außer den Sprachsignalen werden über die Kommunikationsverbindung 5 auch Videodaten bzw. Videosignale übertragen; die Kommunikationseinrichtung 7 empfängt die durch die Digitalkamera des Mobiltelefons 3 aufgenommenen Bilddaten, während das Mobiltelefon 3 gegebenenfalls Bilddaten des Kundendienstes 6 empfängt. Auf dem berührungsempfindlichen Display 4 können also gegebenenfalls Bilder von dem Kundendienstpersonal 8 angezeigt werden, während das Kundendienstpersonal 8 von dem Mobiltelefon 3 aufgenommene Bilder angezeigt bekommt. Das Kundendienstpersonal 8 - technisch sehr versiertes Personal - erstellt nun anhand des Gespräches mit der Bedienperson, wie auch auf der Grundlage von Bildern eine erste Ferndiagnose. Gemeinsam mit der Bedienperson kann nun die für den Kunden optimale Lösungsmöglichkeit angestrebt werden.

An den Kundendienst 6 können durch das Mobiltelefon 3 auch die aus dem Code 2 ausgelesenen Informationen übermittelt werden. Und zwar kann das Mobiltelefon 3 an den Kundendienst 6 auch die Kennzeichnung des Hausgerätes 1 übermitteln. Dann kann das Kundendienstpersonal 8 auf die Datenbank 9 zugreifen und gerätespezifische und/oder kundenspezifische Daten abrufen. Somit erhält das Kundendienstpersonal 8 zusätzliche Informationen betreffend das Hausgerät 1, wie auch den Kunden.

Das Mobiltelefon 3 kann auch einen GPS-Empfänger beinhalten. Dann ist die globale Position des Mobiltelefons 3 bekannt, und das Mobiltelefon 3 kann Positionsdaten an den Kundendienst 6 übertragen, die die aktuelle globale Position des Mobiltelefons 3 wiedergeben. Eine solche Übertragung von Positionsdaten kann ebenfalls nach einer Genehmigung durch die Bedienperson eingeleitet werden. Das Kundendienstpersonal erhält somit Informationen über die jeweils augenblickliche Position des Mobiltelefons 3 und kann somit das Hausgerät 1 orten.

Eine Weiterbildung des Verfahrens sieht vor, dass eine Kommunikationsverbindung 10 auch zwischen dem Mobiltelefon 3 und einer geräteseitigen Kommunikationseinheit (in der Figur nicht dargestellt) aufgebaut wird. Dann können Fehlerdaten, die in einem Speicher des Hausgerätes 1 abgelegt sind, an das Mobiltelefon 3 drahtlos oder aber drahtgebunden übertragen werden. Das Mobiltelefon 3 kann dann diese Fehlerdaten weiter an den Kundendienst 6 übermitteln. Das Kundendienstpersonal 8 bekommt somit zusätzliche Informationen über den Fehler des Hausgerätes 1 und kann somit eine verbesserte Diagnose erstellen.

### Bezugszeichenliste

- 1: Hausgerät
- 2: Code
- 3: Mobiltelefon
- 4: berührungsempfindliches Display
- 5: Kommunikationsverbindung
- 6: Kundendienst
- 7: Kommunikationseinrichtung
- 8: Kundendienstpersonal
- 9: Datenbank
- 10: Kommunikationsverbindung

## Patentansprüche

1. Verfahren zum Unterstützen einer Bedienperson eines Haushaltsgerätes (1) beim Aufnehmen eines Kontaktes mit einem Kundendienstpersonal eines Kundendienstes (6) für das Haushaltsgerät (1) mithilfe eines tragbaren Kommunikationsgerätes (3), mit den Schritten:
- Erfassen eines an dem Haushaltsgerät (1) angebrachten Codes (2) durch eine optische Erfassungseinrichtung des tragbaren Kommunikationsgerätes (3),
- Erfassen einer Kennzeichnung des Haushaltsgeräts (1) aus dem erfassten Code (2), - Aufbauen einer ersten Kommunikationsverbindung (5) zwischen dem tragbaren Kommunikationsgerät (3) und einer Kommunikationseinrichtung (7) des Kundendienstes (6) aufgrund des erfassten Codes (2),
- wobei über die erste Kommunikationsverbindung (5) im Rahmen eines Gesprächs Audiodaten der Bedienperson und des Kundendienstpersonals zwischen dem tragbaren Kommunikationsgerät (3) und der Kommunikationseinrichtung (7) des Kundendienstes (6) übertragen werden,
- wobei über die erste Kommunikationsverbindung (5) Daten von dem tragbaren Kommunikationsgerät (3) an die Kommunikationseinrichtung (7) des Kundendienstes (6) übertragen werden, welche die Kennzeichnung des Haushaltsgeräts (1) umfassen,
- Übertragen, während des Gesprächs, von der optischen Erfassungseinrichtung aufgenommene Bildsignale über die erste Kommunikationsverbindung (5),
- Nutzung, während des Gesprächs, von einer zweiten Kommunikations-verbindung (10) zwischen einer Kommunikationseinheit des Haushaltsgerätes und dem tragbaren Kommunikationsgerät, wobei die Kommunikationseinheit, Daten gemäß dem Bluetooth®-Standard und/oder dem WLAN-Standard übertragen kann,
- Aufzeichnen von Fehlerdaten, die Informationen über aufgetretene Fehler des Haushaltsgerätes beinhalten, durch Sensoren des Haushaltsgeräts, - Abspeichern der Fehlerdaten in einem Speicher des Haushaltsgeräts,
- Übertragen der Fehlerdaten über die zweite Kommunikationsverbindung (10) an das tragbare Kommunikationsgerät und von dort über die erste Kommunikationsverbindung (5) an die Kommunikationseinrichtung (7) des Kundendienstes, so dass dort eine Auswertung der Fehlerdaten durch Kundendienstpersonal des Kundendienstes erfolgen kann.

2. Verfahren nach Anspruch 1, bei welchem das Aufbauen der ersten Kommunikationsverbindung (5) nach Erfülltsein eines vorbestimmten Kriteriums, insbesondere bezüglich einer Eingabe der Bedienperson, erfolgt.

3. Verfahren nach Anspruch 2, bei welchem das vorbestimmte Kriterium beinhaltet, dass das tragbare Kommunikationsgerät (3) eine Eingabe empfängt, über welche das Aufbauen der ersten Kommunikationsverbindung (5) durch die Bedienperson genehmigt wird.

4. Verfahren nach einem der vorhergehenden Ansprüche, bei welchem über die erste Kommunikationsverbindung (5) durch eine Digitalkamera des tragbaren Kommunikationsgeräts (3) aufgenommene Videodaten und/oder durch eine an die Kommunikationseinrichtung (7) des Kundendienstes (6) angeschlossene Digitalkamera aufgenommene Videodaten zwischen dem tragbaren Kommunikationsgerät (3) und der Kommunikationseinrichtung (7) des Kundendienstes (6) übertragen werden.

5. Verfahren nach einem der vorhergehenden Ansprüche, bei welchem der Code (2) ein eindimensionaler Code, insbesondere ein Barcode, oder ein zweidimensionaler Code, insbesondere ein Matrix-Code, ist.

6. Verfahren nach einem der vorhergehenden Ansprüche, bei welchem anhand des erfassten Codes (2) eine Kommunikationsnummer erfasst wird, die es erlaubt, die erste Kommunikationsverbindung (5) mit der Kommunikationseinrichtung (7) des Kundendienstes (6) aufzubauen.

7. Verfahren nach einem der vorhergehenden Ansprüche, bei welchem über die erste Kommunikationsverbindung (5) Positionsdaten mit Informationen über eine aktuelle globale Position des tragbaren Kommunikationsgeräts (3) an die Kommunikationseinrichtung (7) des Kundendienstes (6) übertragen werden.

8. Verfahren nach Anspruch 7, bei welchem die Positionsdaten an die Kommunikationseinrichtung (7) des Kundendienstes (6) unter der Voraussetzung übertragen werden, dass das tragbare Kommunikationsgerät (3) eine Eingabe empfängt, über welche die Übertragung der Positionsdaten durch die Bedienperson genehmigt wird.

9. System mit einem tragbaren Kommunikationsgerät (3), welches eine optische Erfassungseinrichtung zum Erfassen eines Codes (2) aufweist, und mit einem Haushaltsgerät (1), welches einen optoelektronisch lesbaren Code (2), Sensoren zum Aufzeichnen von Fehlerdaten, die Informationen über aufgetretene Fehler des Haushaltsgerätes beinhalten, und einen Speicher zum Abspeichern der Fehlerdaten aufweist, **dadurch gekennzeichnet, dass** der Code (2) eine Information über eine Kennzeichnung des Haushaltsgeräts (1) umfasst und eine Steuereinrichtung des tragbaren Kommunikationsgeräts (3) dazu eingerichtet ist, aufgrund des erfassten Codes (2) eine erste Kommunikationsverbindung (5) zwischen dem tragbaren Kommunikationsgerät (3) und einer Kommunikationseinrichtung (7) eines Kundendienstes (6) aufzubauen, aus dem Code (2) die Kennzeichnung des Haushaltsgeräts (1) zu gewinnen und über die erste Kommunikationsverbindung Daten an die Kommunikationseinrichtung (7) des Kundendienstes (6) zu übertragen, die die Kennzeichnung des Haushaltsgeräts (1) umfassen, wobei das tragbare Kommunikationsgeräts (3) dazu eingerichtet ist, über die erste Kommunikationsverbindung (5) im Rahmen eines Gesprächs Audiodaten einer Bedienperson und eines Kundendienstpersonals des Kundendienstes sowie von der optischen Erfassungseinrichtung aufgenommene Bildsignale zwischen dem tragbaren Kommunikationsgerät (3) und der Kommunikationseinrichtung (7) des Kundendienstes (6) zu übertragen, und wobei das Haushaltsgerät (1) eine Kommunikationseinheit umfasst, um während des Gesprächs eine zweite Kommunikationsverbindung (10) zu nutzen, um Fehlerdaten über die zweite Kommunikationsverbindung (10) an das tragbare Kommunikationsgerät und von dort über die erste Kommunikationsverbindung (5) an die Kommunikationseinrichtung (7) des Kundendienstes zu übertragen, so dass dort eine Auswertung der Fehlerdaten durch Kundendienstpersonal des Kundendienstes erfolgen kann, wobei die Kommunikationseinheit des Haushaltsgerätes (1) den Bluetooth®-Standard und/oder den WLAN-Standard verwendet.

## Claims

1. Method for assisting an operator of a domestic appliance (1), when making contact with customer service staff of a customer service department (6) for the domestic appliance (1) with the aid of a portable communications device (3), having the following steps:
- detection of a code (2) affixed to the domestic appliance (1) by an optical detection facility of the portable communications device (3),
- detection of an identifier of the domestic appliance (1) from the detected code (2),
- setting up of a first communications link (5) between the portable communications device (3) and a communications facility (7) of the customer service department (6) on the basis of the detected code (2),
- wherein, as part of a conversation, audio data of the operator and the customer service staff is transmitted between the portable communications device (3) and the communications facility (7) of the customer service department (6) by way of the first communications link (5),
- wherein data, which comprises the identifier of the domestic appliance (1) is transmitted from the portable communications device (3) to the communications facility (7) of the customer service department (6) by way of the first communications link (5),
- transmission, during the conversation, of image signals recorded by the optical detection facility by way of the first communications link (5),
- use, during the conversation, of a second communications link (10) between a communications unit of the domestic appliance and the portable communications device, wherein the communications unit can transmit data according to the Bluetooth® standard and/or the WLAN standard,
- recording of fault data which contains information on any faults that may have occurred in the domestic appliance, by means of sensors of the domestic appliance,
- storage of the fault data in a memory of the domestic appliance,
- transmission of the fault data to the portable communications device by way of the second communications link (10) and from there to the communications facility (7) of the customer service department by way of the first communications link (5), so that it is possible for the fault data to be evaluated there by customer service staff of the customer service department.

2. Method according to claim 1, wherein the first communications link (5) is set up once a predetermined criterion has been met, in particular in respect of an operator input.

3. Method according to claim 2, wherein the predetermined criterion includes the portable communications device (3) receiving an input, by way of which the operator approves the setting-up of the first communications link (5).

4. Method according to one of the preceding claims, wherein video data recorded by a digital camera of the portable communications device (3) and/or video data recorded by a digital camera connected to the communications facility (7) of the customer service department (6) is transmitted between the portable communications device (3) and the communications facility (7) of the customer service department (6) by way of the first communications link (5).

5. Method according to one of the preceding claims, wherein the code (2) is a one-dimensional code, in particular a barcode, or a two-dimensional code, in particular a matrix code.

6. Method according to one of the preceding claims, wherein a communications number, which allows the first communications link (5) to the communications facility (7) of the customer service department (6) to be set up, is detected on the basis of the detected code (2).

7. Method according to one of the preceding claims, wherein position data including information about a current global position of the portable communications device (3) is transmitted to the communications facility (7) of the customer service department (6) by way of the first communications link (5).

8. Method according to claim 7, wherein the position data is transmitted to the communications facility (7) of the customer service department (6) on condition that the portable communications device (3) receives an input, by way of which the operator approves transmission of the position data.

9. System with a portable communications device (3), which has an optical detection facility for detecting a code (2), and with a domestic appliance (1) which has an opto-electronically readable code (2), sensors for recording fault data, which contains information on any faults that may have occurred in the domestic appliance, and a memory for storing the fault data, **characterised in that** the code (2) comprises information about an identifier of the domestic appliance (1) and a control facility of the portable communications device (3) is designed to set up a first communications link (5) between the portable communications device (3) and a communications facility (7) of a customer service department (6) on the basis of the detected code (2), to acquire the identifier of the domestic appliance (1) from the code (2) and to transmit data comprising the identifier of the domestic appliance (1) to the communications facility (7) of the customer service department (6) by way of the communications link, wherein the portable communications device (3) is designed to transmit, as part of a conversation, audio data of an operator and customer service staff as well as image signals recorded by the optical detection facility between the portable communications device (3) and the communications facility (7) of the customer service department (6) by way of the first communications link (5), and wherein the domestic appliance (1) comprises a communications unit in order to use a second communications link (10) during the conversation, in order to transmit fault data to the portable communications device by way of the second communications link (10) and to transmit it from there to the communications facility (7) of the customer service department by way of the first communications link (5), so that it is possible for the fault data to be evaluated there by customer service staff of the customer service department, wherein the communications unit of the domestic appliance (1) uses the Bluetooth® standard and/or the WLAN standard.

## Revendications

1. Procédé permettant d'assister un opérateur d'un appareil ménager (1) lors d'une prise de contact avec le personnel d'un service après-vente (6) de l'appareil ménager (1) à l'aide d'un appareil de communication portable (3) comprenant les étapes ci-dessous :
- détection d'un code (2) appliqué sur l'appareil ménager (1) par un dispositif de détection optique de l'appareil de communication portable (3),
- acquisition d'une caractérisation de l'appareil ménager (1) à partir du code détecté (2),
- établissement d'une première liaison de communication (5) entre l'appareil de communication portable (3) et un moyen de communication (7) du service après-vente (6) en vertu du code détecté (2),
- selon lequel des données audio, dans le cadre d'une conversation entre l'opérateur et le personnel du service après-vente, sont transmises entre l'appareil de communication portable (3) et le moyen de communication (7) du service après-vente (6) via la première liaison de communication (5), et
- selon lequel des données sont transmises de l'appareil de communication portable (3) au moyen de communication (7) du service après-vente (6) via la première liaison de communication (5), lesquelles données comprennent la caractérisation de l'appareil ménager (1),
- transmission, durant la conversation, des signaux d'image reçus par le dispositif de détection optique via la première liaison de communication (5),
- utilisation, durant la conversation, d'une seconde liaison de communication (10) entre une unité de communication de l'appareil ménager et l'appareil de communication portable, l'unité de communication pouvant transmettre des données selon la norme Bluetooth® et/ou la norme WLAN,
- enregistrement des données de défaut qui contiennent des informations sur des défauts de l'appareil ménager survenus par des capteurs de l'appareil ménager,
- mémorisation des données de défaut dans une mémoire de l'appareil ménager, et
- transmission des données de défaut à l'appareil de communication portable par la seconde liaison de communication (10) et de là au moyen de communication (7) du service après-vente par la première liaison de communication (5), de telle manière qu'une évaluation des données de défaut peut être effectuée sur place par le personnel du service après-vente.

2. Procédé selon la revendication 1, selon lequel l'établissement de la première liaison de communication (5) s'effectue après qu'un critère prédéterminé est satisfait, qui concerne notamment une entrée par un opérateur.

3. Procédé selon la revendication 2, selon lequel le critère prédéterminé concerne la réception par l'appareil de communication portable (3) d'une entrée par laquelle l'établissement de la première liaison de communication (5) est approuvé par l'opérateur.

4. Procédé selon l'une quelconque des revendications précédentes, selon lequel des données vidéo prises par une caméra numérique de l'appareil de communication portable (3) et/ou des données vidéo prises par une caméra numérique connectée au moyen de communication (7) du service après-vente (6) sont transmises entre l'appareil de communication portable (3) et le moyen de communication (7) du service après-vente (6) par l'intermédiaire de la première liaison de communication (5).

5. Procédé selon l'une quelconque des revendications précédentes, selon lequel le code (2) est un code unidimensionnel, notamment un code à barres ou un code bidimensionnel, notamment un code matriciel.

6. Procédé selon l'une quelconque des revendications précédentes, selon lequel, au moyen du code détecté (2), un numéro de communication est détecté qui permet d'établir la première liaison de communication (5) avec le moyen de communication (7) du service après-vente (6).

7. Procédé selon l'une quelconque des revendications précédentes, selon lequel des données de position contenant des informations sur la position instantanée dans le monde de l'appareil de communication portable (3) sont transmises au moyen de communication (7) du service après-vente (6) par la première liaison de communication (5).

8. Procédé selon la revendication 7, selon lequel les données de position sont transmises au moyen de communication (7) du service après-vente (6) à condition que l'appareil de communication portable (3) reçoive une entrée par laquelle l'opérateur autorise la transmission des données de position.

9. Système comprenant un appareil de communication portable (3) qui comporte un dispositif de détection optique permettant de détecter un code (2), et un appareil ménager (1) qui comprend un code (2) lisible par optoélectronique, des capteurs pour enregistrer des données de défaut qui contiennent des informations sur des défauts survenus de l'appareil ménager et une mémoire pour stocker les données de défaut, **caractérisé en ce que** le code (2) contient des informations relatives à la caractérisation de l'appareil ménager (1) et une unité de commande de l'appareil de communication portable (3) est conçue de manière à établir, en vertu du code détecté (2), une première liaison de communication (5) entre l'appareil de communication portable (3) et un moyen de communication (7) d'un service après-vente (6), à obtenir à partir du code (2) la caractérisation de l'appareil ménager (1) et à transmettre des données contenant la caractérisation de l'appareil ménager (1) au moyen de communication (7) du service après-vente (6) par la première liaison de communication,
selon lequel l'appareil de communication portable (3) est conçu de manière à transmettre, via la première liaison de communication (5), des données audio dans le cadre d'une conversation entre un opérateur et un personnel du service après-vente et des signaux d'image reçus par le dispositif de détection optique entre l'appareil de communication portable (3) et le moyen de communication (7) du service après-vente (6), et selon lequel l'appareil ménager (1) comprend une unité de communication destinée à utiliser pendant la conversation une seconde liaison de communication (10) pour transmettre des données de défaut via la seconde liaison de communication (10) à l'appareil de communication portable et de là, via la première liaison de communication (5) au moyen de communication (7) du service après-vente, de telle sorte qu'une évaluation des données d'erreur puisse y être effectuée par le personnel du service après-vente, l'unité de communication de l'appareil ménager (1) utilisant la norme Bluetooth® et/ou la norme WLAN.
